# EUROPEAN PATENT APPLICATION

(11) **EP 1 958 513 A1**
(43) Date of publication of application: **20.08.2008**
(21) Application number: 08101759.2
(22) Date of filing: 19.02.2008
(51) Int. Cl.: A23B 4/06, A23B 4/16, A23B 4/20, A23L 1/333

(54) **Method for packaging and conserving foods based on molluscs and foods obtained thereby**

(30) Priority: 19.02.2007 IT BO20070093
(71) Applicant: Balestieri, Nardo, 47843 Misano Adriatico (RN) (IT); Palazzi, Paolo, 61032 Fano (PS) (IT)
(72) Inventor: Balestieri, Nardo, 47843 Misano Adriatico (RN) (IT); Palazzi, Paolo, 61032 Fano (PS) (IT)
(74) Representative: Negrini, Elena

(57) **Abstract**

A method for packaging and conserving food based on molluscs provides to insert the alive molluscs in a vacuum-package, to make the vacuum and to seal the package containing the molluscs, to preserve the package sealed at temperatures ranging between 0° and 7°C.

## Description

The present invention relates to the field the human foods and, in particular, it refers to a method for packaging and conserving foods based on molluscs, particularly suitable for the utilization of bivalve alive Chamelea Gallina, and it refers to a food obtained by such method.

There are known packaging conservation methods for the bivalve mussels foods such as mussels, clams, razor-clams or for gastropodous molluscs, such as murex, which provide, after an eventual stalling and cleaning, the packaging of the alive mollusc in permeable containers, usually made of net bags, and conserving said wrapped molluscs at low temperature.

A drawback of said known method consists in that it does not allow to keep molluscs alive for a sufficient period of time.

Other drawback of said method consists in that it exposes the mollusc to the ambient factors and puts them under the risk of contamination.

There are also known methods of packaging the foods by enveloping or canning with air, with modified atmosphere, in conservation liquid or glaze or in vacuum, for complete molluscs or without shell, frozen or pasteurized.

A drawback of this latter typology of methods consists in that they cause the organoleptic loss, and thus also the value loss, of the mollusc.

Other drawback of these latter methods consists in that they may be difficult to be used requiring specific and precise norms for cooking and/or consumption.

Further drawback of both the typologies of the above mentioned methods consist in that they require skilled person and quite a lot of time for the preparation and cooking.

There are also known frozen foods of mollusc base with butter and/or raw condiments maintained separately or mixed.

A drawback of said known foods consists in that the loss good smell, fragrance and, in general, the organoleptic property of the fresh product.

Further drawback of the known foods, especially for the kinds in which frozen molluscs and ingredients are mixed together, consists in that they don't allow an optimal cooking because the molluscs and the other ingredients need different cooking times and/or cooking temperatures.

An object of the present invention is to provide a method for packaging and conserving foods of mollusc base and to provide a food carried out by such method which can allow the user to prepare a dish in a simple, fast and intuitive manner.

Other object is to provide a food which can be cooked and be consumed also without the necessity to follow specific and precise norms of cooking and consumption.

Other object is to provide a very safe and hygienic method which allows to consume the molluscs also in uncooked manner and to provide a food carried out by such method that preserves the freshness, the vitality and the food safety for long period of time even if over three weeks.

Other object is to provide a method and a food according to different traditional or innovative cookery recipes.

The method for packaging and conversing foods of molluscs base comprises the following sequence of steps:
- to effect an eventual washing of the molluscs with drinkable water;
- optionally, to place molluscs in a stalling basin in a flow of filtered, purified and oxygenated water in order to eliminate, at least partially, sands and bacteria;
- to select the molluscs, eliminating shells, broken molluscs and external parasitic of the molluscs, for example, by means of a vibration machine;
- to effect an eventual washing of the molluscs;
- to carry out an eventual manual inspection of the product in order to eliminate eventual waste or residual particles;
- to effect an eventual and further washing of the molluscs with drinkable water;
- to cool ingredients and/or condiments to a temperature comprised between 0°C and 10°C;
- to mix molluscs with condiments and/or ingredients;
- to insert the alive molluscs with the ingredients and/or condiments dosed in a vacuum-package, to carry out vacuum and seal the packaging containing the molluscs and the condiments and/or the ingredients;
- to use vacuum package consisting of a heat-sealable and transparent plastic bag;
- to preserve the sealed package at temperatures comprised between 0°C and 7°C.

The method provides to insert the alive molluscs with the dosed ingredients and/or condiments in a vacuum-package comprising a bag or a vacuum envelope and an possible tray for supporting the food or a vacuum small basin.

The method provides to use preferably Chamelea Gallina molluscs but such method may be applied also with others bivalve or cephalopod molluscs.

The method comprises also the following optional steps:
- to insert into the package the molluscs supported by a tray;
- to make into the package a vacuum comprised between 10Torr and 500Torr corresponding to about 1,3K Pa and 66,7K Pa;
- to insert into the package a fluid in a weight quantity comprised between 0,1% and 30% of the weight of the molluscs, preferably to insert water, preferably marine or comparable, not over some percentage points in weight in respect to the weight of the molluscs.

The method further provides optionally the following steps:
- to use a fluid comprising fresh or salt water, in which at least one among citric acid, potassium nitrite, sodium ascorbate is dissolved for the bacteriostatic and/or antioxidant aims;
- to insufflate into the package, before making the vacuum, nitrogen and/or carbon dioxide or oxygen;
- to make a low vacuum in order to insufflate or to leave in the package a volume quantity of nitrogen and/or carbon dioxide or oxygen, comprised between 0,1% and 10% of the volume of the molluscs.

The condiments, whose use is provided by the method, comprise any combination between the following ones:
fresh garlic in pieces, chopped fresh parsley, chilli pepper, thymus, origan, rosemary, thymus, laurel, dill, oil, juice of raw lemons, salt and pepper, butter, wine or its byproduct, for the consumption of the molluscs. Such condiments concur, possibly in combination with others and with ingredients, to prepare the food for the consumption after cooking or uncooked.

In particular the method provides the use of lemon juice and/or extra-virgin olive oil and possibly pepper in powder for the packaging of alive molluscs predisposed for raw consumption.

It is amazing to show that when adding raw garlic and oregano (dehydrated flowers and/or leaves) the storage life and the vitality of the product have amazingly shown increase in a remarkable way.

The ingredients and/or condiments, whose use is provided by the method, and which may be put into the package, comprise at least one cooked vegetable or, preferably, partially cooked vegetable; in particularly at least fresh garlic and fresh chopped parsley, browned in extra-virgin olive oil, and fresh chopped or preserved tomato, which are browned or precooked, with eventual adding of chilli pepper in order to obtain molluscs in tomato sauce.

The method provides also to use as ingredients inserted into the package at least fresh garlic and/or fresh chopped parsley, browned in extra virgin olive oil or precooked and possibly pepper for the preparation of a food fit to obtain molluscs in the "marinara" style (which comprises at least oil, garlic and parsley).

The method provides furthermore to use, as ingredients inserted into the packaging, beans, preferably cannelloni or kidney beans, or chickpeas or others leguminous vegetables, unique or mixed, partially or totally cooked to carry out, by means of short cooking and possible adding of further ingredients such as, for example, water and/or small toasted or fried pieces of bread, hors d'oeuvre, course and soup.

The method provides also the use, as ingredients inserted into the package, of cut courgette, raw or totally or partially cooked, and/or of similar eggplants, broccoli, cauliflowers, artichokes, roots and similar, chopped and cooked completely or preferably partially cooked.

The method provides furthermore to use cooked or partially cooked potato, for example by steaming or by boiling, which is the unique ingredient in combination with the condiments or which ingredient mixed with the other cited ingredients.

Further alternative or added ingredients, whose use is provided by the method, consist in raw avocado and mango, papaya or other fruits cut in pieces, raw or totally or partially cooked and used individually or in combinations, after peeling and stoning.

The weight of ingredients and/or condiments provided by the method is comprised between about 0,5% and 200% of the weight of the molluscs.
It is important to observe that the garlic, particularly the raw one, has shown a bacteriostatic effect in unexpected intensity and has amazingly preserved the vitality of molluscs the Chamelea Gallina, so-called lupine clam.

The use of the oregano shows amazing conservation effects and in combination with the use of the garlic has provided an effect of bacterial control and of conservation of the vitality of the molluscs higher than the sum of the effects expected by the use of the garlic and the oregano separately.

The food based on molluscs of the present invention comprises alive molluscs vacuum packaged, eventually in a small basin or in tray, inside a bag or an envelope for food made by heat sealable transparent plastic, associated with condiments and/or raw, cooked or partially cooked ingredients. The alive molluscs accepted as food consist of preferably, or they comprise, Chamelea Gallina or lupine clam.

The food contains ingredients and/or condiments which comprise, besides the alive molluscs, fresh garlic and fresh chopped parsley, browned in extra virgin olive oil and tomato, fresh cut in pieces or preserved, which is also browned or precooked, with possible adding of chilli pepper in order to carry out a product that, after opening the package and brief cooking, for example in frying pan, provides one or more good smelling plates and tender clam with tomato.

Alternatively, the food comprises, besides the alive molluscs, at least fresh and chopped garlic and/or parsley, browned in extra virgin olive oil or precooked and possible adding pepper for a product which, after opening of the package and brief cooking, for example in frying pan, provides one or more plates of clam in the "marinara" style.

The invention provides furthermore that the food comprises, besides the alive molluscs, the fresh garlic with fresh chopped parsley also one or more of the following condiments: chilli pepper, thymus, oregano, rosemary, laurel, oil, dill, oil, juice of raw lemons, salt and pepper, butter, wine or its by-products, for the raw or cooked consumption of the molluscs.

Furthermore, said food can comprise, at least one among beans, preferably cannelloni or kidney beans, chickpeas or others leguminous partially or totally cooked for hors d'oeuvre, course, or soup, or adding at least one vegetables among courgette, eggplants, broccoli, cauliflowers, artichokes, roots and the likes, chopped in pieces, completely cooked or preferably partially cooked.

The food may comprise, in addiction or in alternative to the other provided ingredients, cooked potatoes or preferably partially cooked, for example by steaming or by boiling.

A further embodiment of the food provides that the ingredients and/or condiments comprise, besides the alive molluscs, at least one vegetable among avocado, mango, papaya or other fruits cut in pieces, raw or totally or partially cooked.

It is provided that the food comprises a weight, expressed in percentage of the weight of the molluscs, of condiments ranging between about 0,10% and 50,00% and the weight of ingredients ranging between about 5,00% and 200,00% for a total weight of condiments and ingredients ranging between about 0,10% and 250,00% of the weight of the molluscs.

An advantage of the present invention is to provide a method for the packaging and the conservation of food based on molluscs and proposing a food carried out by such method which allows to prepare a plate in simple, fast and intuitive way not only in domestic atmosphere, but also in community or restaurant.

Other advantage is to provide a food that can be cooked and be consumed also without the necessity to follow the specific and precise cooking norms for consumption.

Other advantage is to provide a very safe and hygienic method, which allows to consume the molluscs also uncooked and providing a food carried out by said method that preserves the foods fresh, vital and safe for long periods of time longer than 3 weeks.
Other advantage is to supply a method and a food according to several traditional or innovative culinary recipes.

## Claims

1. Method for packaging and conserving food based on molluscs **characterized in** inserting the alive molluscs in a package for vacuum packaging, making the vacuum and sealing the package containing the molluscs, preserving the package sealed at temperatures ranging between 0° and 7°C.

2. Method according to claim 1 **characterized in** using Chamelea Gallina molluscs.

3. Method according to claim 1 **characterized in** using a vacuum packing consisting of an envelope or a bag made of heat sealable and transparent plastic or of a small vacuum basin.

4. Method according to claim 1 **characterized in** inserting in the package the molluscs supported by a tray or by a small basin.

5. Method according to claim 1 **characterized in** making into the packaging a vacuum ranging between 10Torr and 500Torr corresponding to approximately 1,3K Pa and 66,7K Pa.

6. Method according to claim 1 **characterized in** inserting into the package a quantity of fluid whose weight is comprised between 0,1% and 30% of the weight of the molluscs.

7. Method according to claim 6 **characterized in** using a fluid comprising water.

8. Method according to claim 7 **characterized in** using a fluid comprising fresh or salt water, in which at least one among citric acid, potassium nitrite, sodium ascorbate is dissolved.

9. Method according to claim 1 **characterized in** insufflating into the package, before making the vacuum, nitrogen and/or carbon dioxide or oxygen.

10. Method according to claim 1 or claim 9 **characterized in** making a low vacuum in order to insufflate or to leave in the packaging a quantity of nitrogen and/or carbon dioxide or oxygen, ranging between 0,1% and 10% of the volume of the molluscs.

11. Method according to any of previous claims **characterized in** inserting into the package, together with the molluscs, ingredients and/or condiments.

12. Method according to claim 11 **characterized in** using as ingredients and/or condiments at least one among fresh and raw garlic in pieces, fresh chopped parsley, chilli pepper, thymus, oregano, rosemary, laurel, dill, oil, juice of raw lemons, salt and pepper, butter, wine or its by-products, for the uncooked or cooked consumption of the molluscs.

13. Method according to claim 11 or claim 12 **characterized in** using as ingredients at least one cooked vegetable or, preferably, partially cooked vegetable.

14. Method according to claim 13 **characterized in** using as ingredients inserted in the packaging at least fresh and chopped garlic and parsley, browned in extra virgin olive oil and fresh in pieces or preserved tomato also browned or precooked, with possible adding of chilli pepper.

15. Method according to claim 13 **characterized in** using as ingredients inserted into the packaging at least fresh and chopped garlic and/or parsley, browned in extra virgin olive oil or precooked, and possible pepper.

16. Method according to claim 13 **characterized in** using as ingredients inserted into the package at least one among beans, preferably cannellini or kidney beans, chickpeas or others partially or totally cooked leguminous.

17. Method according to claim 13 **characterized in** using as ingredients inserted into the package at least one among courgette, eggplants, broccoli, cauliflowers, artichokes, roots and the like, chopped and cooked completely or preferably partially.

18. Method according to any of the claims 11-17 **characterized in** using as unique ingredient or as additional ingredient, cooked or partially cooked potatoes.

19. Method according to claim 11 or claim 12 **characterized in** using as ingredients at least avocado, mango, papaya or other fruits cut in pieces, uncooked or cooked totally or partially.

20. Method according to any of the claims 13-19 **characterized in** using a quantity of ingredients and/or condiment whose weight is comprised between 1% and 200% of the weight of the molluscs.

21. Method according to any of the claims 13-20 **characterized in** cooling down the ingredients and/or condiments at a temperature comprised between 0°C and 10°C before the insertion into the package together with the molluscs.

22. Method according to any of previous claims **characterized in** carrying out in sequence the following steps, before packaging the molluscs:
- to select the molluscs eliminating shells, broken molluscs and external parasites of the molluscs by means of a vibrating machine;
- to wash the molluscs;
- to inspect the product manually.

23. Method according to claim 22 **characterized in**:
- placing the molluscs in a stalling basin under flow of filtered, purified and oxygenated water in order to eliminate, at least in part, sands and bacteria before the selection of the molluscs;
- washing the molluscs with drinkable water before their packaging and/or before the stalling.

24. Food based on molluscs carried out according to the method of any of previous claims **characterized in that** it comprises alive molluscs packaged in vacuum.

25. Food according to claim 24 **characterized in that** the alive molluscs consist in, or comprise, Chamelea Gallina.

26. Food according to claim 24 **characterized in that** it comprises ingredients and/or condiments associated to the molluscs.

27. Food according to claim 26 **characterized in that** the ingredients and/or condiments comprise, besides the alive molluscs, fresh and chopped garlic and parsley, browned in extra virgin olive oil and tomato, fresh in pieces or preserved, also browned or precooked, with possible adding of chilli pepper.

28. Food according to claim 26 **characterized in that** the ingredients and/or condiments comprise, besides the alive molluscs, at least fresh and chopped garlic and/or parsley, browned in extra virgin olive oil or precooked and possible adding of pepper.

29. Food according to claim 26 **characterized in that** the ingredients and/or condiments comprise, besides the alive molluscs, at least one among fresh garlic in pieces, fresh chopped parsley, chilli pepper, thymus, oregano, rosemary, laurel, dill, oil, juice of raw lemons, salt and pepper, butter, wine or its by-products, for the uncooked or cooked consumption of the molluscs.

30. Food according to claim 26 **characterized in that** the ingredients and/or condiments comprise, besides the alive molluscs, at least one among beans, preferably cannellini or kidney beans, chickpeas or other partially or totally cooked leguminous.

31. Food according to claim 26 **characterized in that** the ingredients and/or condiments comprise, besides the alive molluscs, at least one vegetable among courgette, eggplants, broccoli, cauliflowers, artichokes, roots and the likes, cut in pieces or completely or preferably partially cooked.

32. Food according to any of the claims 26-31 **characterized in that** it comprises cooked potatoes or partially cooked potatoes, which is the unique ingredient or in combination with other ingredients.

33. Food according to claim 26 **characterized in that** the ingredients and/or condiments comprise, besides the alive molluscs, at least one among avocado, mango, papaya or other fruits cut in pieces, uncooked or cooked totally or partially.

34. Food according to claim 26 **characterized in that** the weight of the ingredients and/or condiments is comprised from about 0,10% to 250,00% of the weight of the molluscs.
